# EUROPEAN PATENT SPECIFICATION

(11) **EP 3 241 438 B1**
(45) Date of publication and mention of the grant of the patent: **19.06.2019**
(21) Application number: 17168149.7
(22) Date of filing: 26.04.2017
(51) Int. Cl.: A01N 37/02, A01N 31/02, A01N 25/18, A01N 25/34, A01N 25/22, A01M 1/02, A01P 7/04

(54) **COMPOSITION ATTRACTING OAK PROCESSIONARY MOTH AND A SUSTAINED-RELEASE ATTRACTANT**
ZUSAMMENSETZUNG ZUM ANLOCKEN DES EICHENPROZESSIONSSPINNERS UND LOCKMITTEL MIT VERZÖGERTER FREISETZUNG
COMPOSITION ATTIRANT LES CHENILLES PROCESSIONNAIRES DU CHÊNE ET APPÂT À LIBÉRATION PROLONGÉE

(30) Priority: 02.05.2016 JP 2016092472
(43) Date of publication of application: 08.11.2017
(73) Proprietor: Shin-Etsu Chemical Co., Ltd., Tokyo 100-0004 (JP)
(72) Inventor: HOJO, Tatsuya, Niigata, Niigata 942-8601 (JP); MIYAKE, Yuki, Niigata, Niigata 942-8601 (JP); ISHIBASHI, Naoki, Niigata, Niigata 942-8601 (JP)
(74) Representative: De Vries & Metman

(56) References cited:
- CARMEN QUERO ET AL: "Sex Pheromone of the Oak Processionary Moth Thaumetopoea processionea . Identification and Biological Activity", JOURNAL OF AGRICULTURAL AND FOOD CHEMISTRY, vol. 51, no. 10, 1 May 2003 (2003-05-01), pages 2987-2991, XP055393316, ISSN: 0021-8561, DOI: 10.1021/jf021035g
- GRIES R: "(Z,Z)-11,13-Hexadecadienyl acetate and (Z,E)-11,13,15-hexadecatrienyl acetate: synergistic sex pheromone components of oak processionary moth, Thaumetopoea processionea (Lepidoptera: Thaumetopoeidae)", CHEMOECOLOGY, vol. 14, 30 June 2004 (2004-06-30), pages 95-100, XP009195058, DOI: https://rd.springer.com/article/10.1007/s0 0049-003-0266-9
- DAVID T. WILLIAMS ET AL: "Monitoring oak processionary moth Thaumetopoea processionea L. using pheromone traps: the influence of pheromone lure source, trap design and height above the ground on capture rates : Monitoring T . processionea L. using pheromone traps", AGRICULTURAL AND FOREST ENTOMOLOGY, vol. 15, no. 2, 15 February 2013 (2013-02-15), pages 126-134, XP055393469, GB ISSN: 1461-9555, DOI: 10.1111/afe.12005

## Description

### BACKGROUND OF THE INVENTION

### 1. Field of the Invention

The present invention relates to a composition attracting Oak Processionary Moth (or Thaumetopoea processionea, hereinafter called "OPM") which is a serious insect pest to Oak (Quercus) such as oak and evergreen oak; and a sustained-release attractant.

### 2. Description of the Related Art

OPM is a serious insect pest against woods and forests in West, South and Central Europe, and is known to cause damage mainly on leave of Oak. Its larva has fine body hair which contains a poison, and releases the poison when perceives a danger, so that the insect pest is harmful to human being and animals. Accordingly, it is important to forecast the presence or absence and the distribution of the insect pest. Further, an effective means for the prevention of the insect pest has been desired to be used in place of sprinkling of insecticides in order to avoid contamination of soils and water.

Recently, chemical structures of sex pheromones of many moths have been clarified. Surveys of propagation or extinction of insect pests are effectively carried out, using chemically synthesized sex pheromones. Sex pheromones are chemical substances which are secreted in general by female insects, and have an effect of species-specifically attracting a same species of male imagoes. Efficient survey on propagation or extinction of insect pests may be made by elucidating chemical structures of sex pheromones and using them as so-called attracting materials. Further, it is possible to prevent insect pests of the imaginal stage from breeding by disturbing mating, or disturbing communication.

The sex pheromones of this species have been identified to be a composition of (*Z*,*Z*)-11, 13-hexadecadienyl acetate, (*E*,*Z*)-11, 13-hexadecadienyl acetate, and (*Z*,*Z*)-11, 13-hexadecadienol (hereinafter called "three-component composition") (see the following non-patent literature 1); and a composition of (*Z*,*Z*)-11, 13-hexadecadienyl acetate and (*Z*,*E*)-11, 13, 15-hexadecatrienyl acetate (hereinafter called "two-component composition") (see the following non-patent literature 2).

### Prior Literatures

### Non-Patent Literatures

[Non-Patent Literature 1] Quero C 2003 J. Agric. Food. Chem. 51:2987 [Non-Patent Literature 2] Gries R 2004 Chemoecology 14:95

### SUMMARY OF THE INVENTION

However, there has been no experiment to compare the aforesaid two compositions. A possibly optimal composition for attracting OPM has not been elucidated. Accordingly, the previous sustained-release attractants comprising attracting compositions might not be optimal. (*Z*,*E*)-11, 13, 15-hexadecatrienyl acetate, known as a sex pheromone, has a conjugated tri-en structure at a terminal and, therefore, is less stable, so that this may changes during use and become less effective to attract OPM. Accordingly, it is desired to develop a sustained-release attracting agent wherein (*Z*,*E*)-11, 13, 15-hexadecatrienyl acetate is made stabler.

The present invention provides a composition and a sustained-release agent for attracting OPM being serious insect pest against woods and forests, which stably and efficiently catches OPM in coincidence with actual breeding of OPM.

The present inventors compared the three-component composition with the two-component composition, both of which are known to be sex pheromones, for an attracting property by the number of caught wild insects to find that the two-component composition has a higher attracting property. In addition, it was found that the two-component composition catches the insects, starting at an earlier stage, judging by a tendency in the numbers of the caught insects in periodical observations.

That is to say, the three-component composition catches the less number of insects and is less stable, so that it seems difficult to know the presence or absence and distribution of the insects with the three-component composition. In addition, a tendency in the numbers of the caught insects in periodical observations does not coincide with actual breeding of the insects, so that it is difficult to know a state of breeding. It is likely that one may fail in sprinkling an insecticide timely, even using the attracting agent. Release of the sex pheromone from the attracting agent continues after setting the attracting agent. The amount of the sex pheromone which was released in the absence of the insects is wasteful.

Although the two-component composition shows the larger number of the caught insects and the earlier start of catching, compared to the three-component composition, the tendency in the numbers of the caught insects in periodical observations continues in a gentle up or down slop. The insect pests produce a "nest" and show group behaviour. Accordingly, it is thought that the imaginal insect pests breed with concentration. Therefore, the number of caught insect pests is surmised to increase abruptly. However, the tendency of catch with the two-component composition in periodical observations is not such, which cannot be said to reflect the tendency of breeding of the insects. In particular, the number of caught insects is small at a location where a less number of insects breed and, therefore, catch of the insects immediately after start of breeding might be misunderstood as just accidental, which leads to missing a proper timing for prevention of breeding by sprinkling an insecticide. Another problem is that it is necessary in mass attraction and killing to catch at least a necessary amount of insects, depending upon the amount of breeding in a whole period of breeding; however, if there is a period when catch is not done despite actual occurrence of breeding, this leads to the increased number of chances for mating, resulting in a crucial failure of prevention of breeding. If this happens just after start of breeding at which the amount of breeding is largest, the failure is more disastrous. Here, mass attraction and killing refers to a prevention method of attracting male insect pests by an attracting composition to catch them so as to change a ratio of wild male/female into an imbalance whereby the chance for mating is decreased.

The present inventors have made keen research to solve the aforesaid problems. The present inventors have prepared a composition comprising the aforesaid three-component composition and (*Z*,*E*)-11, 13, 15-hexadecatrienyl acetate which is a component of the two-component composition and is not contained in the three-component composition to constitute a composition comprising (*Z*,*Z*)-11, 13-hexadecadienyl acetate, (*E*,*Z*)-11, 13-hexadecadienyl acetate, (*Z*, *Z*)-11, 13-hexadecadienol and (*Z*,*E*)-11, 13, 15-hexadecatrienyl acetate (hereinafter, referred to as a four-component composition), and have confirmed its attracting property to find that the number of caught insects is surprisingly large, compared to cases of the two-component composition and the three-component composition, and the composition allows timely catch of insect pests in coincidence with occurring of breeding, which is less plausible with the two-component composition, and thus have completed the present invention.

One aspect of the invention provides a composition attracting Oak Processionary Moth, comprising (*Z*,*Z*)-11, 13-hexadecadienyl acetate, (*E*,*Z*)-11, 13-hexadecadienyl acetate, (*Z*,*Z*)-11, 13-hexadecadienol and (*Z*,*E*)-11, 13, 15-hexadecatrienyl acetate.

Another aspect of the invention provides a sustained-release attractant for Oak Processionary Moth, comprising the aforesaid attracting composition contained in a sealed sustained-release container.

Another aspect of the invention provides a method for predicting breeding of Oak Processionary Moth or for massively attracting and killing Oak Processionary Moth, comprising a step of setting a trapping apparatus in a forest, wherein the trapping apparatus is provided with the aforesaid sustained-release attractant and a trap for catching insects which are attracted by the sustained-release attractant.

It becomes possible on account of the invention to stably and efficiently catch male wild imagoes of OPM in a long period of time and to predict occurrence of breeding of the insect pests. It becomes also possible to dramatically increase the number of caught insects and to allow timely catch of insect pests in coincidence with occurring of breeding, so that prevention is made possible by mass attraction and killing.

### DETAILED DESCRIPTION OF THE PREFERRED EMBODIMENTS

The attracting composition comprises at least (*Z*,*Z*)-11, 13-hexadecadienyl acetate, (*E*,*Z*)-11, 13-hexadecadienyl acetate, (*Z*,*Z*)-11, 13-hexadecadienol and (*Z*,*E*)-11, 13, 15-hexadecatrienyl acetate. This four-component composition surprisingly increases the number of caught insects, compared to cases of the two-component composition and the three-component composition, and allows timely catch of insect pests in coincidence with occurring of breeding, which is less plausible with the two-component composition.

Some factors may be thought to explain why the four-component composition increases the number of caught insects and allows timely catch of insect pests in coincidence with occurring of breeding.

A first factor is that a combination of (*Z*,*Z*) -11, 13-hexadecadienyl acetate, (*E*,*Z*)-11, 13-hexadecadienyl acetate and (*Z*,*Z*)-11, 13-hexadecadienol acts for attraction caused by location identification, while (*Z*,*E*)-11, 13, 15-hexadecatrienyl acetate acts for attraction caused by start of action. As s result, the four-component composition is thought to show a synergistic effect that the four-component composition makes the start of action toward the attracting source earlier, compared to the three-component composition, and makes identification of a location of the attracting source easier, compared to the two-component composition, so that a catching pattern is likely to match the occurrence of breeding of the insect pests, and the insect pests are prone to gather around the attracting source and the number of catches is increased. Here, "to act for attraction caused by start of action" means that a material stimulates insects to take an action of mating and cause action of searching for female. "To act for attraction caused by location identification" means that after the start of searching for female, male moves zigzag and identify the location of an attracting source by means of a difference in concentration of the material in air.

A second factor is that a composition comprising the three components without (*E*,*Z*)-11, 13-hexadecadienyl acetate and a composition comprising the three components without (*Z*,*Z*)-11, 13-hexadecadienol show less attracting properties; and, accordingly, the four components are essential for a composition with the purpose of attraction.

Supposing that weights of (*Z*,*Z*)-11, 13-hexadecadienyl acetate, (*E,Z*)-11, 13-hexadecadienyl acetate, (*Z,Z*)-11, 13-hexadecadienol and (*Z*,*E*)-11, 13, 15-hexadecatrienyl acetate are a, b, c and d, respectively. A weight ratio, a:b:c:d,is not particularly limited as long as attraction for OPM is caused. Preferably the ratio is from (100:1:1:1) to (100:50:50:200), more preferably from (100:1:1:50) to (100:10:10:150). As stated above, (*Z*,*E*)-11, 13, 15-hexadecatrienyl acetate is thought to act for attraction caused by start of action. Then, it is preferred that (*Z*,*E*)-11, 13, 15-hexadecatrienyl acetate is contained in an amount larger than (*E*,*Z*)-11, 13-hexadecadienyl acetate or (*Z*,*Z*)-11, 13-hexadecadienol.

It is enough that the attracting composition comprises at least (*Z*, *Z*)-11, 13-hexadecadienyl acetate, (*E*,*Z*)-11, 13-hexadecadienyl acetate, (*Z*,*Z*)-11, 13-hexadecadienol and (*Z*,*E*)-11, 13, 15-hexadecatrienyl acetate. The composition may contain impurities, such as isomers, inevitable in the preparation and diluents for the purpose of dilution or increased stability, as long as these do not cause adverse influence such as decreased attraction for OPM. Examples of the diluents include dodecyl acetate, tetradecyl acetate, hexadecyl acetate, 1-dodecanol, 1-tetradecanol, 1-hexadecanol. The diluents may preferably be incorporated in an amount of 0.01 to 100 times by weight, relative a total weight of the four sex pheromone components, which may vary with particular purposes.

Further, the attracting composition may comprise additives, such as a polymerization inhibitor, an antioxidant and/or UV absorbent, for stability with time during storage or use. The polymerization inhibitor includes, for example, 2,2'-methylene bis(4-methyl-6-t-butylphenool). The antioxidant includes, for example, butylhydroxy toluene, butylhydroxy anisole, hydroquinone, and vitamin E. the UV absorbent includes 2-hydroxy-4-octoxybenzophenon, 2-(3,5-di-t-butyl-2-hydroxyphenyl-5-chlorobenzotriazol, and 2,5'-di-t-butylhydroquinon. An amount of each additive depends on actual conditions in use, and is preferably 0.1 to 5.0 % by weight, relative to a total weight of the four-component composition.

The sustained-release attractant may be in any form as long as the attracting composition is gradually released stably in a long period of time. The sustained release attractant is preferably contained in a **sealed** sustained-release container.

The sustained-release container has a part for releasing the attracting composition, particularly the sex pheromones, which part is made preferably of polyethylene, polyvinyl chloride, polyvinyl acetate, polyvinyl alcohol, polypropylene, ethylene-vinyl acetate copolymer, polylactic acid, polyglycolic acid, aliphatic polyester, aryl-modified aliphatic polyester, modified polyvinyl alcohol, and combinations thereof. The sustained-release container may comprise pigments such as red oxide, and additives such as UV absorbents.

A shape of the sustained-release container is not particularly limited, and may be in a form of thin tube, laminate bag or ampule, preferably ampule. The ampule preferably has an inner diameter of 0.50 to 1.50 mm and a wall thickness of 0.30 to 0.70 mm. A length of the ampule is not particularly limited. However, if the length is too small, it is difficult to set the ampule in a trapping apparatus. Accordingly a length of 1cm or more is preferred.

The trapping apparatus is provided with the sustained-release attractant and a trap for catching insects which are attracted by the sustained-release attractant.

The trap may be any commercially available one, preferably in a type of delta, wing, packet, funnel or adhesive.

A method for predicting breeding of Oak Processionary Moth or for massively attracting and killing Oak Processionary Moth comprises at least a step of setting the trapping apparatus in a forest, wherein the trapping apparatus is provided with the sustained-release attractant and a trap for catching insects which are attracted by the sustained-release attractant.

### EXAMPLES

The invention will be explained in detail with reference to the following non-limitative Examples and Comparative Examples.

### Example 1

The components for the four-component composition, i.e., (*Z*,*Z*)-11, 13-hexadecadienyl acetate, (*E*,*Z*)-11, 13-hexadecadienyl acetate, (*Z*,*Z*)-11, 13-hexadecadienol and (*Z*,*E*)-11, 13, 15-hexadecatrienyl acetate, were mixed in a weight ratio of 100:5:5:100, to which 2 % by weight of butylhhydroxytoluene (antioxidant) and 2 % by weight of 2-(3,5-di-t-butyl-2-hydroxyphenyl-5-chlorobenzotriazol (UV absorbent), relative to a total weight of the four components, were then added to obtain an attracting composition.

9.56 Milligrams of the attracting composition thus obtained were placed in a thin tube moulded out of a high density polyethylene and hiving an inner diameter of 1.28 mm and a length of 4 cm, which tube was then sealed to provide a sustained-release attractant. 9.56 Milligrams of the attracting composition consisted of 4.55 mg of (*Z*, *Z*)-11, 13-hexadecadienyl acetate, 0.23 mg of (*E*,*Z*)-11, 13-hexadecadienyl acetate, 0.23mg of (*Z*,*Z*)-11, 13-hexadecadienol and 4.55 mg of (*Z*,*E*)-11, 13, 15-hexadecatrienyl acetate. Ten funnel traps (cylinder type of trap with a diameter of 20 cm and a length of 30 cm) were each provided with the sustained-release attractant and placed in a forest of oak to periodically observe the number of caught insects. The average numbers are shown in Table 1.

As seen, six OPMs were caught in the period of from 9^{th} to 17^{th} after start of the experiment on June 30. In 12 days after then, 132 OPMs were caught, which was a peak of breeding. Then, the number of caught insects decreased, but the catch continued until August 26.

### Comparative Example 1

The components of the three-component composition, i.e., (*Z*,*Z*)-11, 13-hexadecadienyl acetate, (*E*,*Z*)-11, 13-hexadecadienyl acetate and (*Z*,*Z*)-11, 13-hexadecadienol were mixed in a weight ratio of 100:5:5, to which the antioxidant and the UV absorbent were then added, as in Example 1, to obtain an attracting composition.

5.01 Milligrams of the composition were taken up so that each of the amounts of the components was same as that in Example 1, and placed in a thin tube moulded out of a high density polyethylene and having an inner diameter of 1.28 mm and a length of 2 cm, which tube was then sealed to provide a sustained-release attractant. 5.01 Milligrams of the attracting composition consisted of 4.55 mg of (*Z*,*Z*)-11, 13-hexadecadienyl acetate, 0.23 mg of (*E*,*Z*)-11, 13-hexadecadienyl acetate, and 0.23 mg of (*Z*,*Z*)-11, 13-hexadecadienol. Ten funnel traps were each provided with the sustained-release attractant and placed in a forest of oak to periodically observe the number of caught insects, as in Example 1. The average numbers are shown in Table 1.

As seen, the number of caught insects was very small. The date of start of catch and the increase in the number of caught insects are both delayed, compared to those with the four-component composition (Example 1).

### Comparative Example 2

The components of the two-component composition, i.e., *(Z*, *Z)-11,* 13-hexadecadienyl acetate and (*Z*,*E*)-11, 13, 15-hexadecatrienyl acetate, were mixed in a weight ratio of 100:100, to which the antioxidant and the UV absorbent were then added, as in Example 1, to obtain an attracting composition.

9.1 Milligrams of the composition were taken up so that each of the amounts of the components was same as that in Example 1, and placed in a thin tube moulded out of a high density polyethylene and hiving an inner diameter of 1.28 mm and a length of 4 cm, which tube was then sealed to provide a sustained-release attractant. 9.1 Milligrams of the attraction composition consisted of 4.55 mg of (*Z*, *Z*)-11, 13-hexadecadienyl acetate and 4.55 mg of (*Z*,*E*)-11, 13, 15-hexadecatrienyl acetate. Ten funnel traps were each provided with the sustained-release attractant and placed in a forest of oak to periodically observe the number of caught insects, as in Example 1. The average numbers are shown in Table 1.

As seen, the number of caught insects is larger than that with the three-component composition of Comparative Example 1, but is remarkably less than that with the four-component composition of Example 1. A degree of increase in the number of caught insects after the start of breeding is less distinct than in Example 1.

**Table 1**

| | Number of caught insects in periodical observations after start of the experiment | | | | | | | |
|---|---|---|---|---|---|---|---|---|
| | June 30 | July 9 | July 17 | July 29 | Aug. 6 | Aug. 12 | Aug. 18 | Aug. 26 |
| Example 1 | Start | 0 | 6 | 132 | 50 | 25 | 4 | 3 |
| Comparative Example 1 | Start | 0 | 0 | 6 | 13 | 0 | 0 | 0 |
| Comparative Example 2 | Start | 0 | 0 | 38 | 41 | 12 | 3 | 3 |

As seen in Table 1, the four-component composition (Example 1) showed the earlier date of the start of catch, the earlier increase in the number of caught insects and the lasting catching, compared to the three-component composition (Comparative Example 1) and the two-component composition (Comparative Example 2). This means that (*Z,E*)-11, 13, 15-hexadecatrienyl acetate having a conjugated tri-en structure at a terminal was made stabler in the four-component composition. It is believed that (*E*,*Z*)-11, 13-hexadecadienyl acetate and/or (*Z*,*Z*)-11, 13-hexadecadienol contributed to this higher stability.

## Claims

1. A composition attracting Oak Processionary Moth, comprising (Z, *Z*)-11, 13-hexadecadienyl acetate, (*E*,*Z*)-11, 13-hexadecadienyl acetate, (*Z*,*Z*)-11, 13-hexadecadienol and (*Z*,*E*)-11, 13, 15-hexadecatrienyl acetate.

2. The composition attracting Oak Processionary Moth according to claim 1, wherein relative weights of (*Z*,*Z*)-11, 13-hexadecadienyl acetate, (*E*,*Z*)-11, 13-hexadecadienyl acetate, (*Z*,*Z*)-11, 13-hexadecadienol and (*Z*,*E*)-11, 13, 15-hexadecatrienyl acetate are in a ratio of from 100:1:1:1 to 100:50:50:200.

3. A sustained-release attractant for Oak Processionary Moth, comprising the composition according to claim 1 or 2 contained in a sealed sustained-release container.

4. A method for predicting breeding of Oak Processionary Moth or for massively attracting and killing Oak Processionary Moth, comprising a step of setting a trapping apparatus in a forest, wherein the trapping apparatus is provided with the sustained-release attractant according to claim 3 and a trap for catching insects which are attracted by the sustained-release attractant, wherein massively attraction and killing refers to a prevention method of attracting male insect pests by an attracting composition to catch them so as to change a ratio of wild male/female into an imbalance whereby the chance for mating is decreased.

## Patentansprüche

1. Zusammensetzung, die den Eichenprozessionsspinner anlockt, und (Z, Z) -11, 13-Hexadecadienylacetat, (E, Z) -11, 13-Hexadecadienylacetat, (Z,Z)-11, 13-Hexadecadienol und (Z,E)-11, 13, 15-Hexadecatrienylacetat aufweist.

2. Zusammensetzung, die den Eichenprozessionsspinner anlockt, gemäß Anspruch 1, wobei die relativen Gewichte von (Z,Z)-11, 13-Hexadecadienylacetat, (E,Z)-11, 13-Hexadecadienylacetat, (Z, Z) -11, 13-Hexadecadienol und (Z,E) -11, 13, 15-Hexadecatrienylacetat in einem Verhältnis von 100:1:1:1 bis 100:50:50:200 stehen.

3. Lockstoff für den Eichenprozessionsspinner mit anhaltender Freisetzung, der die Zusammensetzung gemäß Anspruch 1 oder 2 in einem verschlossenen Behälter zur anhaltenden Freisetzung enthält.

4. Verfahren, um die Fortpflanzung des Eichenprozessionsspinners vorherzusagen, oder um den Eichenprozessionsspinner massiv anzulocken und abzutöten, das den Schritt des Auslegens einer Fallenapparatur in einem Wald aufweist, wobei die Fallenapparatur mit dem Lockstoff zur anhaltenden Freisetzung gemäß Anspruch 3 und einer Falle zum Einfangen von Insekten, die durch den Lockstoff zur anhaltenden Freisetzung angelockt werden, versehen ist, wobei sich das massive Anlocken und Abtöten auf ein Präventionsverfahren des Anlockens von männlichen Schadinsekten durch eine Lockzusammensetzung bezieht, um diese einzufangen, um ein Verhältnis von wilden Männchen zu Weibchen in ein Ungleichgewicht zu bringen, wodurch die Chance für eine Paarung reduziert wird.

## Revendications

1. Composition attirant la chenille processionnaire du chêne, comprenant de l'acétate de (*Z*, *Z*)-11, 13-hexadécadiényle, de l'acétate de (*E*, *Z*)-11, 13-hexadécadiényle, du (*Z*, *Z*)-11, 13-hexadécadiénol et de l'acétate de (*Z*, *E*)-11, 13, 15-hexadécatriényle.

2. Composition attirant la chenille processionnaire du chêne selon la revendication 1, dans laquelle des poids relatifs d'acétate de (*Z*, *Z*)-11, 13-hexadécadiényle, acétate de (*E*, *Z*)-11, 13-hexadécadiényle, (*Z*, *Z*)-11, 13-hexadécadiénol et acétate de (*Z*, *E*)-11, 13, 15-hexadécatriényle sont dans un rapport de 100:1:1:1 à 100:50:50:200.

3. Attractif à libération prolongée de la chenille processionnaire du chêne, comprenant la composition selon la revendication 1 ou 2 contenue dans un récipient étanche à libération prolongée.

4. Procédé pour prédire la reproduction de la chenille processionnaire du chêne ou pour attirer et tuer massivement la chenille processionnaire du chêne, comprenant une étape d'installation d'un appareil piégeur dans une forêt, dans lequel l'appareil piégeur est pourvu de l'attractif à libération prolongée selon la revendication 3 et un piège pour attraper les insectes qui sont attirés par l'attractif à libération prolongée, dans lequel le fait d'attirer et de tuer massivement se réfère à un procédé de prévention consistant à attirer des insectes nuisibles mâles par une composition attractive pour les attraper de manière à déséquilibrer un rapport mâle/femelle sauvage, moyennant quoi les chances d'accouplement sont réduites.
